# EUROPEAN PATENT APPLICATION

(11) **EP 4 458 647 A1**
(43) Date of publication of application: **06.11.2024**
(21) Application number: 23802132.3
(22) Date of filing: 27.09.2023
(51) Int. Cl.: B61L 29/08

(54) **SAFETY CROSSING CONTROL METHOD AND SYSTEM**

(30) Priority: 07.03.2023 CN 202310254538
(71) Applicant: CRSC Research & Design Institute Group Co., Ltd., Beijing 100070 (CN)
(72) Inventor: NIE, Zhiguo, Beijing 100070 (CN); LIU, Pei, Beijing 100070 (CN); LIN, Qiang, Beijing 100070 (CN); QU, Dandan, Beijing 100070 (CN); JIAO, Wanli, Beijing 100070 (CN); YANG, Yao, Beijing 100070 (CN); LI, Xiang, Beijing 100070 (CN); JIN, Bo, Beijing 100070 (CN); CHEN, Yingli, Beijing 100070 (CN); ZHANG, Qingchen, Beijing 100070 (CN); JIN, Songyue, Beijing 100070 (CN); WANG, Chunhua, Beijing 100070 (CN); WU, Zhenyu, Beijing 100070 (CN); YANG, Fan, Beijing 100070 (CN)
(74) Representative: Zaboliene, Reda
(86) International application number: PCT/CN2023/122250
(87) International publication number: WO 2024/183273

(57) **Abstract**

The present invention belongs to the technical field of rail transit and discloses a crossing safety control method and system. The control method includes: outputting, by a crossing subsystem, a control command to an input-output subsystem according to obtained signal device state information and railway train running position information; and controlling, by the input-output subsystem, a signal device according to the control command to automatically control closing or opening of a crossing. The present invention adopts a safety calculation host to complete a logical operation of the crossing, and adopts an electronic execution unit to control the crossing signal device such as a barrier machine, a signal machine, and a sound device to collect a state of the signal device, thus forming a closed-loop management safety control process; and the closing or opening of the crossing is automatically controlled according to a train running position, a group control function of adjacent crossings in an area is realized, a manual control panel is configured, and an emergency manual control ability is obtained.

## Description

### FIELD OF TECHNOLOGY

The present invention belongs to the technical field of rail transit, in particular to a crossing safety control method and system.

### BACKGROUND

A railway level-crossing allows road traffic to cross a railway line, so it is necessary to adopt a safe and reliable control system in order to effectively ensure safety of road traffic vehicles and pedestrians.

In a traditional railway level-crossing, a manual control manner is usually adopted. When a crossing watchkeeper receives a dispatch call or a notification of detecting that a railway train is approaching, a crossing is closed manually. After the railway train passes through the crossing, the crossing is opened manually. This control manner has high requirements for concentration and an on-the-job situation of the watchkeeper. If a railway train operation plan is temporarily adjusted, and the watchkeeper does not notice that the railway train is approaching the crossing, it is easy to cause a collision danger.

When there are a plurality of railway lines in an area and several adjacent highway traffic-passing through crossings, a traditional crossing control system can only set up several sets of crossing control devices and allocate watchkeepers respectively, which leads to a waste of resources.

### SUMMARY

Aiming at the above problems, the present invention provides a crossing safety control method and system, which adopts the following technical solutions:
A crossing safety control method, comprising the following steps: outputting, by a crossing subsystem, a control command to an input-output subsystem according to obtained signal device state information and railway train running position information; and controlling, by the input-output subsystem, a signal device according to the control command, to automatically controls closing or opening of a crossing.

Further, the signal device comprises a signal machine, a barrier machine and a sound device, and the signal machine comprises a blocking signal machine and a crossing signal machine.

Further, controlling, by the input-output subsystem, the barrier machine according to the control command comprises the following steps:
if there is a railway train approaching the crossing, or no railway train approaching the crossing or a railway train has entered but has not yet left the crossing, the crossing subsystem sends a barrier lowering command to the input-output subsystem, and the input-output subsystem controls the barrier machine to drive a barrier to lower so as to close the crossing according to the barrier lowering command.

Further, controlling, by the input-output subsystem, the barrier machine according to the control command further comprises the following steps:
if there is no railway train approaching the crossing, or a railway train has left the crossing, the crossing subsystem sends the barrier lowering command to the input-output subsystem according to a remotely controlled crossing closing command from an interlocking system; and the input-output subsystem controls the barrier machine to drive the barrier to lower so as to close the crossing according to the barrier lowering command.

Further, controlling, by the input-output subsystem, the barrier machine according to the control command further comprises the following steps:
if there is no railway train approaching the crossing, or a railway train has left the crossing, and the crossing subsystem does neither receive a remotely controlled crossing closing command from an interlocking system nor receive a crossing closing command from a manual control panel, the crossing subsystem checks that the blocking signal machine restores a prohibiting signal through the input-output subsystem, and sends a barrier raising command to the input-output subsystem; and the input-output subsystem controls the barrier machine to drive the barrier to rise so as to open the crossing according to a barrier raising command.

Further, the input-output subsystem controlling the barrier machine to drive a barrier to lower according to the barrier lowering command is specifically as follows:
the input-output subsystem closes a first level power supply switch, a second level power output loop switch and a third level power output loop switch in turn, and controls the barrier machine to drive the barrier to lower; the input-output subsystem obtains a position of the barrier in real time; if the barrier reaches a horizontal position or exceeds a predetermined time, the input-output subsystem disconnects the third level power output loop switch, the second level power output loop switch and the first level power supply switch in turn; and if the barrier does not reach the horizontal position or does not exceed the predetermined time, continuing with barrier switching, and the barrier machine continues to drive the barrier to lower.

Further, the input-output subsystem controlling the barrier machine to drive the barrier to rise according to the barrier raising command is specifically as follows:
the input-output subsystem closes a first level power supply switch, a second level power output loop switch and a third level power output loop switch in turn, and controls the barrier machine to drive the barrier to rise; the input-output subsystem obtains a position of the barrier in real time; if the barrier reaches a vertical position or exceeds a predetermined time, the third level power output loop switch, the second level power output loop switch and the first level power supply switch are disconnected in turn; and if the barrier does not reach the vertical position or does not exceed the predetermined time, continuing with barrier switching, and the barrier machine continues to drive the barrier to rise.

Further, the input-output subsystem obtaining a position of the barrier in real time is specifically as follows:
by checking a normally opened node state and a normally closed node state in the horizontal position of the barrier and a normally opened node state and a normally closed node state in the vertical position of the barrier, a position state of the barrier is determined;
the position state of the barrier is corrected by a switch position state of the input-output subsystem to determine a barrier valid position state; and the position of the barrier is determined according to the barrier valid position state.

Further, the control method further comprises the following steps: a railway running permission is issued according to a state of the barrier machine, a state of the signal machine, and a monitoring state of an obstacle in a crossing area, which is specifically as follows:
whether there is a crossing that does not allow a railway train to pass through is judged according to the state of the barrier machine, the state of the signal machine, and the monitoring state of the obstacle in the crossing area; if the crossing exists, a railway running permission for prohibiting the railway train to pass through is generated, the blocking signal machine is controlled to display a prohibiting signal, a transponder is controlled to send a crossing unprotection message, and crossing unprotection information is output to a system such as the interlock; if the crossing does not exist, a railway running permission allowing the railway train to pass through is generated, the blocking signal machine is controlled to display a permission signal, the transponder is controlled to send a crossing protection message, and crossing protection information is output to a system such as the interlock.

Further, the control method further comprises the following steps: the input-output subsystem collects the signal device state information and sends the signal device state information to the crossing subsystem.

The present invention further provides a crossing safety control system, comprising:
a crossing subsystem for outputting a control command to an input-output subsystem according to obtained signal device state information and railway train running position information; and
the input-output subsystem for controlling a signal device according to the control command so as to directly control the signal device at a crossing to automatically control closing or opening of the crossing.

Further, the signal device comprises a signal machine, a barrier machine and a sound device, and the signal machine comprises a blocking signal machine and a crossing signal machine.

Further, the crossing subsystem comprises a safety calculation host, the safety calculation host comprises I series and II series, and a main control unit of each series of the safety calculation host comprises a power module, a main control module and a communication expansion module; each series of the main control module is connected with an interlocking system, an axle counter, a barrier machine and the signal machine, each series of the main control module comprises a machine A, a machine B and a machine C; the machine A and the machine B are used for safety calculation, and results are valid when calculation results of the machine A and the machine B are consistent, otherwise the series turns into a safety state, the machine C is used for interface maintenance, and the machine C is also used for storing a maintenance log, and sending real-time maintenance information to an external maintenance interface.

The present invention further provides a rail area crossing control group, the rail area comprising a plurality of adjacent crossings, wherein each crossing is provided with the crossing safety control system, and the plurality of crossing safety control systems are connected to each other.

The present invention further provides a rail area crossing control method, the rail area comprises a plurality of adjacent crossings, wherein the rail area crossing control method comprises the following steps:
providing the crossing control system at each crossing; and
sharing, by each crossing control system, train position detection information to coordinate the control of each crossing.

Further, the method further comprises the following steps:
setting the same operating cycle for the plurality of crossing control systems, and sharing, by the plurality of crossing control systems, information through a secure transmission network; the shared information comprising an execution cycle (EC), information on a plurality of axle counter points, a crossing state, a crossing opening command, a crossing closing command, and a confirmation of train passage; and
in the plurality of crossing control systems, setting local expected ECs at information receiving parties; when the crossing control system receiving information receives a message from the other party, obtaining a message transmission delay according to the EC in the message and the local expected EC; and obtaining an actual delay time for closing the crossing according to preset delay time for closing the crossing.

The present invention has the following beneficial effects:
1. The crossing safety control method and system in the present invention adopt a safety calculation host to complete a logical operation of the crossing, and adopt an electronic execution unit to control the crossing signal device such as the barrier machine, the signal machine, and the sound device and collect the state of the signal device, thus forming a closed-loop management safety control process; and the closing or opening of the crossing is automatically controlled according to the train running position, a group control function of adjacent crossings in the area is realized, a manual control panel is configured, and an emergency manual control ability is obtained.
2. The safety calculation host in the present invention adopts a double two out of two architecture, of which a safety integrity degree reaches an SIL4 level, adopts a safety control technology of control-feedback closed-loop management, provides a powerful automatic safety control function at the level-crossing, and solves the problem that the crossing cannot be closed in time due to negligence of the watchkeeper; and key components are redundant to provide higher reliability and availability, which further reduces device maintenance stress.
3. The rail area crossing control group and method in the present invention reduce repeated resources of the multi-crossing control devices (axle counters, train position detection points), and improve safety coordination control ability of the multi-crossings in the area.

Other features and advantages of the present invention would be described in subsequent specification and, in part, would partly become apparent from the specification or would be known by the implementation of the present invention. The purpose and other advantages of the present invention may be realized and obtained by means of the structure indicated in the specification and in the attached drawings.

### BRIEF DESCRIPTION OF THE DRAWINGS

In order to more clearly explain technical solutions in embodiments of the present invention or in the prior art, a simple introduction of accompany drawings which are needed to be used in the embodiments or description of the prior art is given in the following. It is obvious that the drawings described below are some embodiments of the present invention, and for an ordinary person skilled in the art, other drawings can also be obtained from these drawings under the premise of no creative labor.
FIG. 1 shows a structural schematic diagram of a crossing safety control system according to an embodiment of the present invention;
FIG. 2 shows an application scenario schematic diagram of the crossing safety control system according to an embodiment of the present invention;
FIG. 3 shows a schematic diagram of each interface and internal connection relations of the crossing safety control system according to an embodiment of the present invention;
FIG. 4 shows a structural schematic diagram of a safety calculation host according to an embodiment of the present invention;
FIG. 5 shows a structural schematic diagram of a rail area crossing control group according to an embodiment of the present invention;
FIG. 6 shows a flow schematic diagram of the crossing safety control system in an automatic control mode according to an embodiment of the present invention;
FIG. 7 shows a schematic diagram of a barrier control flow according to an embodiment of the present invention;
FIG. 8 shows a schematic diagram of a barrier position collection process according to an embodiment of the present invention;
FIG. 9 shows a flow schematic diagram of issuing a railway running permission according to an embodiment of the present invention;
FIG. 10 shows a layout schematic diagram of a plurality of crossing control systems in a rail area according to an embodiment of the present invention; and
FIG. 11 shows a flow schematic diagram of a control method of a plurality of crossings in a rail area according to an embodiment of the present invention.

### DESCRIPTION OF THE EMBODIMENTS

In order to make the purpose, technical solutions and advantages of embodiments of the present invention more clear, the technical solutions in the embodiments of the present invention would be clearly and completely explained in combination with the attached drawings in the embodiments of the present invention. Obviously, the described embodiments are a part of the embodiments of the present invention, but not all the embodiments. Based on the embodiments of the present invention, all other embodiments obtained by a person skilled in the art without making creative labor fall within a protection scope of the present invention.

It should be noted that the terms "first", "second", etc. in this application are used to distinguish similar objects and are not necessarily used to describe a particular order or precedence.

An embodiment of the present invention provides a crossing safety control system, which adopts a safety control platform of double two out of two architecture, adopts an axle counter to detect the position of a railway train, and adopts a safety communication interface to exchange information with a railway station computer interlocking system and an adjacent decentralized crossing control system to automatically control closing and opening of a crossing, and adopts a Lineside Electronic Unit (LEU) to control a transponder. The control system reaches a safety integrity degree of an SIL4 level, automatically closes and opens the crossing according to the running position of the railway train, and automatically interacts with the adjacent decentralized crossings to form an area decentralized control of the crossings, which is suitable for a European E1/E2 high-speed railway line, and provides a manual control panel as an emergency backup operation means. The system is safe and reliable, and effectively solves the problem of decentralized control of crossing watchkeepers and regional crossings.

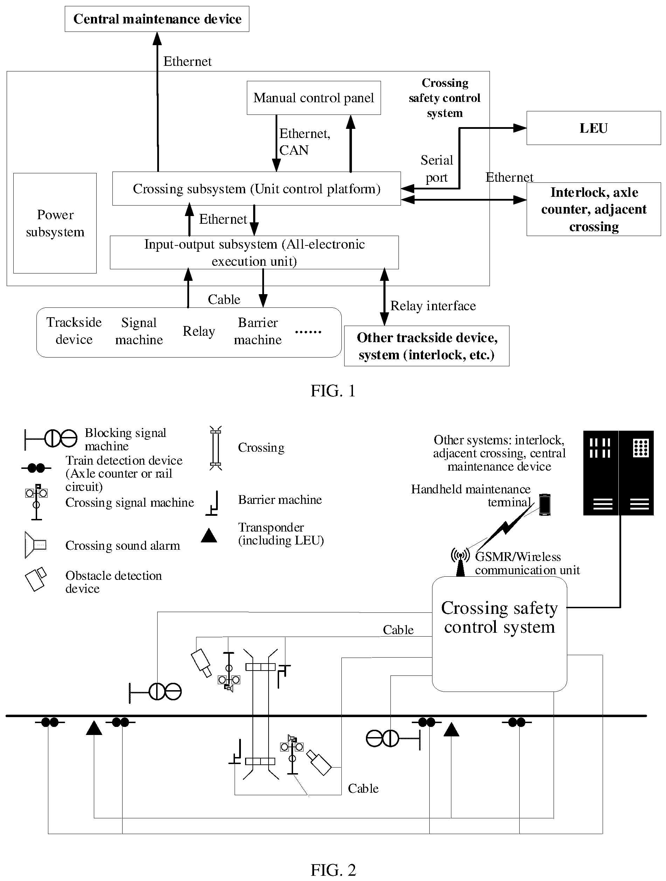

As shown in FIG. 1 and FIG. 2, a crossing safety control system, which is deployed beside a railway line, comprises a crossing subsystem, an input-output subsystem, a manual control panel, a power subsystem, an external communication interface system and related accessories.

It should be noted that the crossing safety control system adopts a double two out of two redundant structure design, and all the components involved in safety information processing and transmission in the system adopt two series structure design in accordance with a "fault-safety" principle, and any fault of a single point would not affect normal use of the system so as to meet the requirements of railway signal control device with high reliability and high safety.

The crossing subsystem functions in management of the whole system, safety calculation of the crossing and communication with an external system. The crossing subsystem communicates with the interlocking system, the axle counter and the crossing control system adjacent to the crossing through a security communication network (Ethernet), and the crossing subsystem is connected to the LEU through a serial port. The input-output subsystem communicates with the crossing subsystem through an all-electronic execution unit through a closed link high-security transmission network (Ethernet), and the input-output subsystem is connected with a signal device through a signal cable. The signal device comprises a signal machine, a barrier machine, a sound device, etc. The signal machine comprises a blocking signal machine and a crossing signal machine. The manual control panel is connected to the crossing subsystem through an internal communication network (e.g., Ethernet, CAN). The power subsystem is connected to the crossing subsystem, the input-output subsystem and the manual control panel. The power subsystem is used to supply power to the crossing subsystem, the input-output subsystem and the manual control panel as well as the transmission network and other devices.

As shown in FIG. 2, further, the crossing control system is connected to a handheld maintenance terminal through a wireless communication unit, which can be GSMR, and the handheld maintenance terminal can be a mobile phone, a laptop, etc.

In the embodiment of the present invention, the crossing subsystem adopts a safety calculation host with high reliability and high safety (a unit control platform), and the crossing subsystem is used to output a control command to the input-output subsystem according to obtained signal device state information and railway train running position information. The signal device state information includes state information of the barrier machine, state information of the signal machine and state information of the sound device. The input-output subsystem is used to control the signal device according to the control command, directly control the signal device at the crossing to automatically control the closing or opening of the crossing. The input-output subsystem is also used to collect state information of the signal device and send it to the crossing subsystem.

The position information of the railway train can be obtained by the following means: the axle counter receives the position information given by the receiving interlocking device or the position information given by the adjacent crossing safety control system.

The crossing subsystem obtains the position of the railway train from the axle counter, and the crossing subsystem controls the transponder through the LEU.

The safety calculation host of the crossing subsystem adopts the double two out of two structure. The safety calculation host (UCP), as a safety calculation logic platform, is consisted of redundant I series and II series, and the single series is of the two out of two structure. The safety calculation host (UCP) is provided with a maintenance information storage function. For example, the safety calculation host (UCP) is provided with a 10G memory to store internal maintenance information. The two series are installed in a cage, and information is exchanged through a bottom plate of the cage. The two series operate in a master-slave mode, and any series can work independently. When any series detects a serious fault, such as a system memory verification error or inconsistent dual-CPU comparation results, it takes a security measure and switches actively to ensure normal system functions and high system reliability.

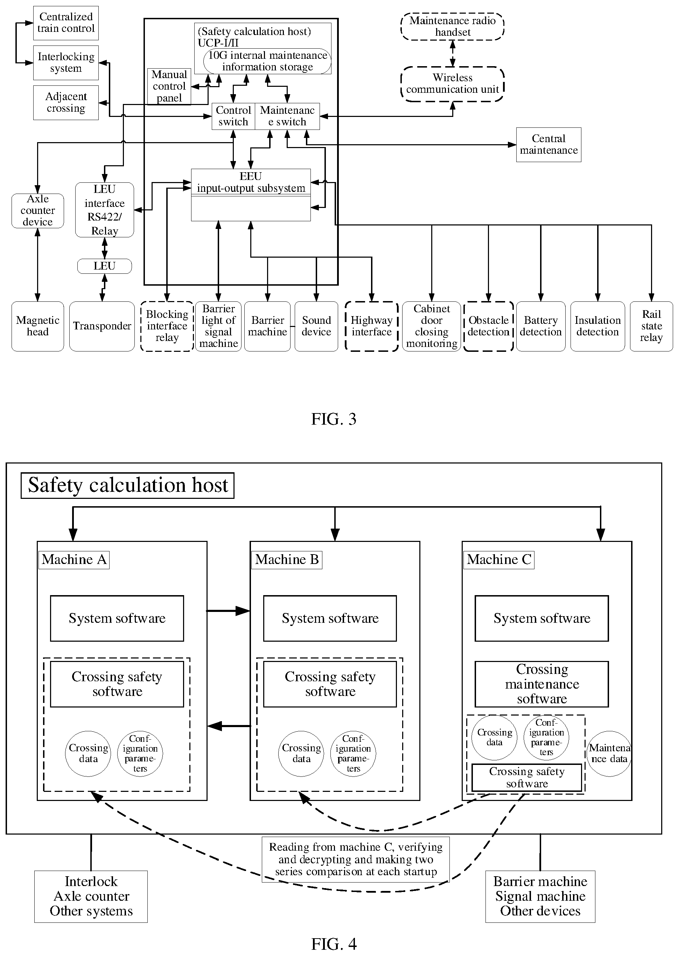

As shown in FIG. 3, each interface and internal connection relations of the crossing safety control system are described in detail below. The safety calculation host (UCP) is connected to an input end of the input-output subsystem through a control switch, the safety calculation host is connected to the input and output ends of the input-output subsystem through a maintenance switch, the safety calculation host is connected to a central maintenance system through the maintenance switch, and the maintenance switch is also connected to a maintenance platform through a wireless communication unit. The safety calculation host is connected to the manual control panel, the safety calculation host is connected to the LEU through an LEU interface RS4 22/relay, the LEU is connected to the transponder, and the LEU interface RS4 22/relay is also connected to the input end of the input-output subsystem. The control switch is also connected to the interlocking system, the axle counter and the crossing control system of the adjacent crossing. The interlocking system is also connected to a centralized scheduling control system, and the axle counter is connected to a magnetic head. The input end of the input-output subsystem is also connected to a block interface relay, a cabinet door closing monitoring system, an obstacle monitoring system, a battery detection system, an insulation detection system, and a rail state relay. The output end of the input-output subsystem is also connected to the signal machine, a barrier light, the sound device and a highway interface.

As shown in FIG. 4, further, a main control unit of each series in the safety calculation host consists of a power module, a main control module, and a communication expansion module. Hardware structures of the two series are the same, and a switching module is set between the two series. The main control module of each series is connected with the interlocking system, axle counter, barrier machine, signal machine, etc. The main control module of each series is divided into machines A, B, C, wherein the machines A and B are used for safety calculation; calculation results of the machines A and B are valid when they are checked to be consistent, otherwise the system is transferred to a security state; the machine C is used for an interface maintenance function; and the machine C is securely isolated from communication networks of the machines A and B. This system is not provided with an independent maintenance machine, the machine C is also used for storing a maintenance log, sending real-time maintenance information to an external maintenance interface (for example, central maintenance).

A system software of the safety calculation host has a security platform management function. When the machines A and B are started up, they read a crossing safety software and configuration data from the machine C, verify and decrypt the read content, and allow the crossing safety software to run after the results of the two series are consistent. Meanwhile, it has functions of maintenance diagnosis information management, compression storage, and forwarding.

A crossing system software is divided into two independent parts. The crossing safety software running in the machines A and B is responsible for crossing safety logic calculations. A crossing maintenance software running in the machine C is responsible for recording maintenance data and outputting the maintenance data, data of the crossing safety software includes crossing data and configuration parameters, and data of the crossing maintenance software includes the crossing data, configuration parameters and maintenance data.

The input-output subsystem is a standard execution unit of the system, which uses the all-electronic execution unit to exchange information with the crossing subsystem through an internal security communication network. The input-output subsystem is used to receive a control command from the crossing subsystem and control the signal device according to the control command. It is also used to collect a state of the signal device and transmit it to the crossing subsystem. All modules in the input-output subsystem are redundantly configured as two series, and each module is configured with two CPUs. When calculation results of the two CPUs are consistent, the calculation results are valid. When the calculation results are inconsistent, a security measure is taken. Configurations of redundant modules are the same, forming the double two out of two security architecture.

The input-output subsystem is also used to control electrical contacts such as an obstacle detection, an insulation detection, and a cabinet door monitoring.

The crossing safety control system uses the axle counter to detect a running position of the railway train, and automatically controls the closing and opening of the crossing according to the running position of the railway train. The crossing safety control system communicates with an interlocking system in a station through the security communication network, receives train approaching and departing information sent by the interlocking system, and automatically controls the closing and opening of the crossing. Meanwhile, a remotely controlled command of the interlocking system is received to control the closing and opening of the crossing, and the barrier is moved separately.

The crossing safety control system in the embodiment of the present invention is applicable to a European E1/E2 high-speed railway system. The crossing subsystem controls the transponder by controlling the LEU, uses Level crossing information (SUBSET-026 V360 Track to Train Packet Number 88) to send a crossing state to the railway train, so as to improve a safety protection level of the crossing.

As shown in FIG. 1 and FIG. 3, the manual control panel is a standby man-machine operation representation interface of the system, which is used to receive display data of the crossing subsystem (railway train approach information, a barrier machine state, etc.), display it to an operator in a form of LED lights, and have a buzzer to warn the operator. The manual control panel is also equipped with a mechanical button, which is responsible for receiving an operation command of the operator and sending it to the crossing subsystem.

The manual control panel is used as a backup mode of on-site emergency control. When external transmission of the system fails and the crossing is manually commanded temporarily, an on-site watchkeeper can directly control the signal device such as the barrier machine, the signal machine and the sound device through the control panel.

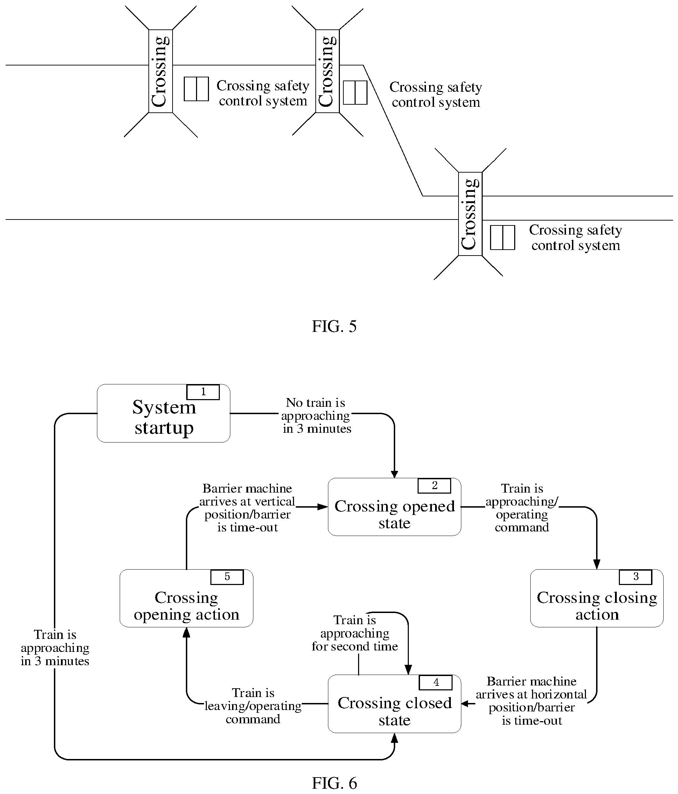

As shown in FIG. 5, an embodiment of the present invention further provides a rail area crossing control group, the rail area comprising a plurality of adjacent crossings, wherein each crossing is provided with a crossing safety control system, and the plurality of crossing safety control systems are connected to each other. The crossing safety control system of each crossing shares train position detection information, calculates a safety logic of the area crossings in a decentralized manner, and collaborates with automatic control of each crossing. The decentralized crossing safety control systems exchange information through the closed security communication network and share the train position detection information and control logic.

A crossing safety control system in the plurality of crossing safety control systems is connected with the interlocking system, which is used to receive the remotely controlled command of the interlocking system and control the closing and opening of the crossing. Other crossing safety control devices receive and execute the remotely controlled command.

The embodiment of the present invention also provides a crossing safety control method, comprising the following steps: outputting, by a crossing subsystem, a control command to an input-output subsystem according to obtained signal device state information and railway train running position information; the signal device state information comprising state information of a barrier machine, state information of a signal machine and state information of a sound device; controlling, by the input-output subsystem, the signal device according to the control command to automatically control the closing or opening of the crossing; and collecting, by the input-output subsystem, state information of the signal device and sending, by the input-output subsystem, the state information to the crossing subsystem.

The crossing subsystem obtaining the railway train running position information comprises: the crossing subsystem detects the railway train running position information through the axle counter, the crossing subsystem receives the railway train running position information sent by the interlocking system, or the crossing subsystem receives the railway train running position information given by the adjacent crossing safety control system. Through the train running position information, it can be judged whether a train is approaching or leaving.

As shown in FIG. 6, the crossing safety control system normally operates in an automatic control mode. When the crossing safety system is started up, it is in a startup state, the crossing signal machine turns on a prohibiting light, the barrier machine switches to a closed state, the blocking signal machine turns on the prohibiting light, and drives the sound device to alarm.

When the crossing safety control system is in the automatic control mode after being started up, and the approaching of the railway train is not detected within 3 minutes and a crossing closing or barrier closing command is not received from the computer interlocking system, the crossing safety control system is transferred to a crossing opened state, otherwise it is transferred to a crossing closed state.

When the crossing safety control system is in the automatic control mode, and it detects that the railway train is leaving and no other railway train is approaching, and there is no manual closing command, a crossing opening procedure is started. The crossing safety system receives a manual crossing opening command sent by the interlock, and if no railway train is approaching at current and the system is currently in the crossing closed state, the crossing opening procedure is started.

After the crossing safety control system starts the crossing opening procedure, the blocking signal machine is driven to turn on the prohibiting light. Upon the system starts the crossing opening procedure, after delay time (configurable), the barrier machine drives the barrier to rise. If the crossing safety control system is configured with two pairs of barriers in a passing-through direction, the two pairs of barriers would move at the same time. When the barrier is raised to a vertical position, stop driving the barrier to move. When the crossing safety system is in the open state, it does not drive the barrier to move, and it drives the crossing signal machine to display allowable lamplight, stops the sound alarm, and drives the blocking signal machine to display a prohibiting signal.

For the automatic control crossing, if the crossing safety control system receives a condition that a railway train is approaching and the system is currently in the crossing opened state, a crossing closing procedure is started. When the crossing safety control system receives a manual crossing closing command sent by the interlock and the system is currently in the crossing opened state, the crossing closing procedure is started.

After the crossing safety control system starts the crossing closing procedure, it first drives the crossing signal machine to light up the prohibiting signal and start the sound alarm. After the sound device alarms 5-30S (configurable), the barrier machine starts to drive the barrier to lower. If the system is configured with two pairs of half barriers, the two groups of barriers controlling entrance of the crossing should be controlled to lower successively. After the crossing signal machine gives an opening prohibiting signal 6-15S (configurable), the barrier controlling entrance of the crossing is controlled to lower. After the crossing signal machine gives the opening prohibiting signal 6-60S (configurable), the barrier controlling exit of the crossing is controlled to lower. If the system is configured with a pair of full barriers, the two pairs of barriers would be driven to lower at the same time after 6-15S (configurable). If the system is configured with two pairs of half barriers and an obstacle detection condition is satisfied, the barrier controlling entrance of the crossing is controlled to lower after the crossing signal machine gives the opening prohibiting signal 6-15S (configurable). When there is no obstacle in the crossing area after the barrier controlling entrance of the crossing is lowered, the barrier controlling exit of the crossing is driven to lower. When there is an obstacle in the crossing area, the barrier controlling the exit of the crossing should be kept being sucked up. When the barrier reaches a horizontal position or a predetermined time 10-30S (configurable) is exceeded, stop driving the barrier to move. After stopping driving all barriers, the crossing closing procedure ends, and the crossing safety control system enters the crossing closed state.

When the crossing safety control system is in the crossing closed state, the barrier machine maintains the current state, drives the crossing signal to be the prohibiting lamplight, and stops the alarm of the sound device. When the crossing safety control system is in the crossing closed state, the barrier is checked to be in the closed state and the crossing signal is the prohibiting lamplight, the blocking signal machine is driven to display the allowable lamplight.

The barrier of the barrier machine is lowered to the horizontal position when the railway train is about to pass through the crossing, so as to prevent the pedestrians and vehicles on a highway side from entering the crossing and prevent a collision with the railway train. The barrier of the barrier machine rises to the vertical position after the railway train passes through the crossing, so as to allow the pedestrians and vehicles on the highway side to pass through the crossing. The crossing safety control system in the embodiment of the present invention safely controls the barrier to move according to the railway train position, remotely controlled command and emergency on-site manual command.

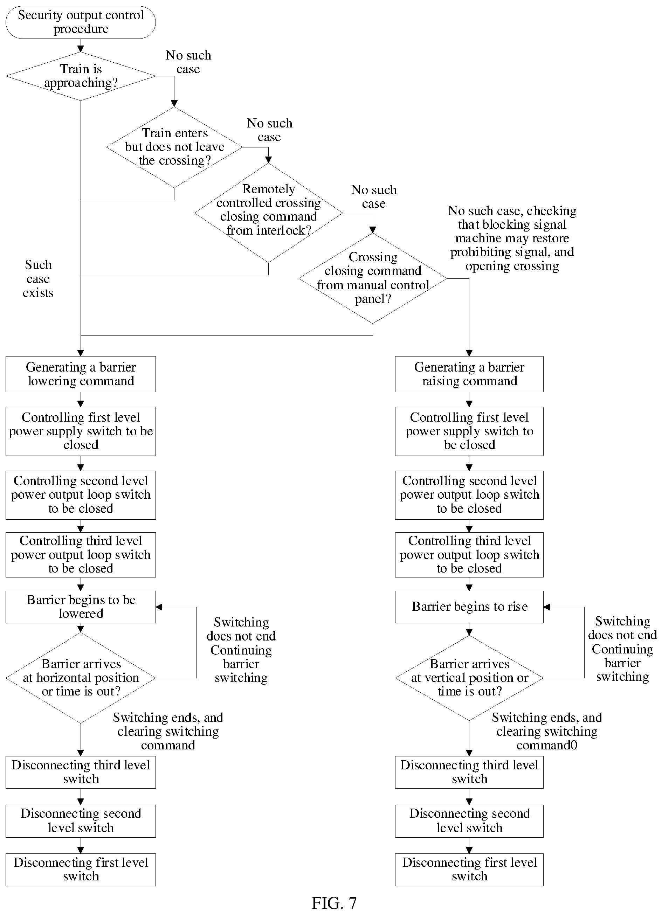

As shown in FIG. 7, in an embodiment, the input-output subsystem controlling the barrier machine according to the control command comprises the following steps:
the crossing subsystem detects whether there is a railway train approaching the crossing through the axle counter, and if there is a railway train approaching the crossing, the crossing subsystem sends the barrier lowering command to the input-output subsystem; and the input-output subsystem controls the barrier machine to drive the barrier to lower so as to close the crossing according to the barrier lowering command;
if no railway train approaching the crossing or a railway train has entered but has not yet left the crossing, the crossing subsystem sends a barrier lowering command to the input-output subsystem, and the input-output subsystem controls the barrier machine to drive a barrier to lower so as to close the crossing according to the barrier lowering command;
if there is no railway train approaching the crossing, or a railway train has left the crossing, the crossing subsystem sends the barrier lowering command to the input-output subsystem according to a remotely controlled crossing closing command from an interlocking system; and the input-output subsystem controls the barrier machine to drive the barrier to lower so as to close the crossing according to the barrier lowering command;
if there is no railway train approaching the crossing, or a railway train has left the crossing, and the crossing subsystem does not receive the remotely controlled crossing closing command from the interlocking system, but receives the crossing closing command from the manual control panel, the crossing subsystem sends the barrier lowering command to the input-output subsystem; and the input-output subsystem controls the barrier machine to drive the barrier to lower so as to close the crossing according to the barrier lowering command;
if there is no railway train approaching the crossing, or a railway train has left the crossing, and the crossing subsystem does neither receive a remotely controlled crossing closing command from an interlocking system nor receive a crossing closing command from a manual control panel, the crossing subsystem checks that the blocking signal machine may restore a prohibiting signal through the input-output subsystem, and sends a barrier raising command to the input-output subsystem; and the input-output subsystem controls the barrier machine to drive the barrier to rise so as to open the crossing according to a barrier raising command;
wherein the input-output subsystem controlling the barrier machine to drive a barrier to lower according to the barrier lowering command is specifically as follows: the input-output subsystem closes a first level power supply switch, a second level power output loop switch and a third level power output loop switch in turn, and controls the barrier machine to drive the barrier to lower; the input-output subsystem obtains the position of the barrier in real time; if the barrier reaches a horizontal position or a predetermined time is exceeded, switching ends and clear a switching command, and the input-output subsystem disconnects the third level power output loop switch, the second level power output loop switch and the first level power supply switch in turn; and if the barrier does not reach the horizontal position or the predetermined time is not exceeded, the switching does not end, and continuing with barrier switching, and the barrier machine continues to drive the barrier to lower;
wherein the input-output subsystem controlling the barrier machine to drive the barrier to rise according to the barrier raising command is specifically as follows: the input-output subsystem closes a first level power supply switch, a second level power output loop switch and a third level power output loop switch in turn, and controls the barrier machine to drive the barrier to rise; the input-output subsystem obtains the position of the barrier in real time; if the barrier reaches a vertical position or a predetermined time is exceeded, switching ends and clear a switching command, and the third level power output loop switch, the second level power output loop switch and the first level power supply switch are disconnected in turn; and if the barrier does not reach the vertical position or the predetermined time does not exceeded, the switching does not end, continuing with barrier switching, and the barrier machine continues to drive the barrier to rise.

In this embodiment, after the safety calculation of the crossing subsystem, the switching of the barrier is controlled and a wrong movement of the barrier is prevented through the three-level control switches of the input-output subsystem.

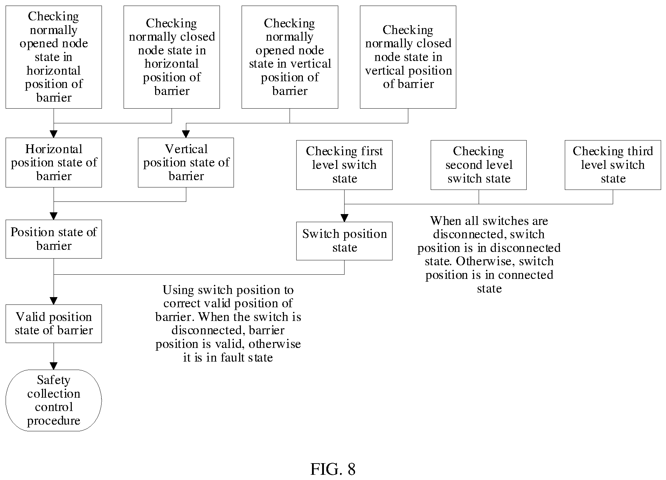

As shown in FIG. 8, in one embodiment, the input-output subsystem obtaining the position of the barrier in real time is specifically as follows: by checking a normally opened node state and a normally closed node state in the horizontal position of the barrier and a normally opened node state and a normally closed node state in the vertical position of the barrier, a position state of the barrier is determined; and the position state of the barrier is corrected by a switch position state of the input-output subsystem to determine a barrier valid position state; and the position of the barrier is determined according to the barrier valid position state. A truth value table of the barrier valid position state is shown in Table 1. It should be noted that when all switches of the input-output subsystem are disconnected, the switch position state is a disconnected state; otherwise, it is a non-disconnected state. The barrier valid position is corrected by using the switch position state of the input-output subsystem. When the switch is disconnected, the barrier position is valid, otherwise it is in a fault state.

**Table 1: A truth value table for determining position state of barrier machine**

| Horizontal normally opened node position | Horizontal normally closed node position | Vertical normally opened node position | Vertical normally closed node position | First level switch position | Second level switch position | Third level switch position | Position of barrier |
|---|---|---|---|---|---|---|---|
| Closed | Disconnec ted | Disconnec ted | Closed | Disconnec ted | Disconnec ted | Disconnec ted | Horizontal position |
| Closed | Disconnec ted | Disconnec ted | Closed | Closed | Disconnec ted | Disconnec ted | Horizontal fault |
| Closed | Disconnec ted | Disconnec ted | Closed | Disconnec ted | Closed | Disconnec ted | Horizontal fault |
| Closed | Disconnec ted | Disconnec ted | Closed | Disconnec ted | Disconnec ted | Closed | Horizontal fault |
| Disconnec ted | X | Disconnec ted | X | X | X | X | Disconnec ted position |
| Disconnec ted | X | Disconnec ted | X | X | X | X | Disconnec ted position |
| Disconnec ted | X | Disconnec ted | X | X | X | X | Disconnec ted position |
| Disconnec ted | X | Disconnec ted | X | X | X | X | Disconnec ted position |
| Disconnec ted | Closed | Closed | Disconnec ted | Disconnec ted | Disconnec ted | Disconnec ted | Vertical position |
| Disconnec ted | Closed | Closed | Disconnec ted | Closed | Disconnec ted | Disconnec ted | Vertical fault |
| Disconnec ted | Closed | Closed | Disconnec ted | Disconnec ted | Closed | Disconnec ted | Vertical fault |
| Disconnec ted | Closed | Closed | Disconnec ted | Disconnec ted | Disconnec ted | Closed | Vertical fault |

In Table 1, X indicates that when a combination of other conditions is satisfied, no matter which state this condition is in, a judgment result would not be affected.

The crossing signal machine turns on double red flash lights when the railway train is about to pass through the crossing, so as to prevent the pedestrians and vehicles on the highway side from entering the crossing and prevent a collision with the railway train. The crossing signal machine turns on or off a white flash light after the railway train passes through the crossing, so as to allow the pedestrians and vehicles on the highway side to pass through the crossing. The blocking signal machine displays the passing-through allowable lamplight (such as a green light) when the crossing is well protected, and the passing-through prohibiting lamplight (such as a red light) when the crossing is not well protected.

The input-output subsystem controlling the signal machine according to the control command comprises the following steps: according to the railway train running position information, remotely controlled command, emergency on-site manual command and crossing state, controlling the signal machine to operate.

The railway running permission includes blocking signal machine display (allowing to pass through the crossing, prohibiting to pass through the crossing), a transponder message (the crossing is protected, the crossing is not protected), allowable information to a system such as the interlock (the crossing is protected, the crossing is not protected).

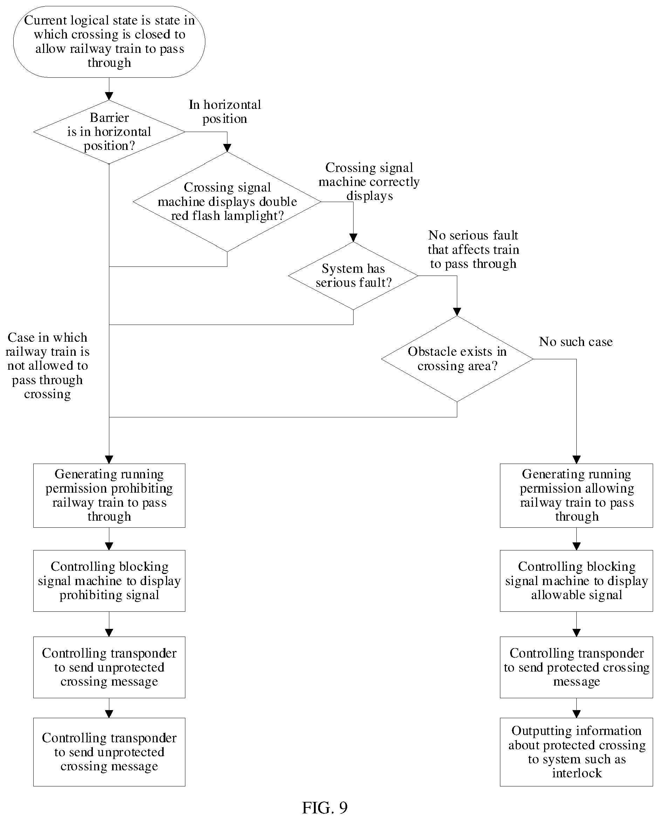

As shown in FIG. 9, the crossing safety control method in the embodiment of the present invention further comprises the following steps: issuing a railway running permission according to a state of the barrier machine, a state of the signal machine, and a monitoring state of an obstacle in a crossing area, which is specifically as follows:
whether there is a crossing that does not allow a railway train to pass through is judged according to the state of the barrier machine, the state of the signal machine, and the monitoring state of the obstacle in the crossing area; if the crossing exists, a railway running permission for prohibiting the railway train to pass through is generated, the blocking signal machine is controlled to display a prohibiting signal, a transponder is controlled to send a crossing unprotection message, and crossing unprotection information is output to a system such as the interlock; if the crossing does not exist, a railway running permission allowing the railway train to pass through is generated, the blocking signal machine is controlled to display a permission signal, the transponder is controlled to send a crossing protection message, and crossing protection information is output to a system such as the interlock.

The crossing situations in which the railway train is not allowed to pass through include the barrier being not at the horizontal position, the crossing signal machine showing the double red flash lamplight, a serious fault in the crossing safety control system, and an obstacle in the crossing area.

The embodiment of the present invention further provides a rail area crossing control method, the rail area comprising a plurality of adjacent crossings. The rail area crossing control method comprises the following steps: providing the crossing control system at each crossing; sharing, by each crossing control system, train position detection information to coordinate the control of each crossing.

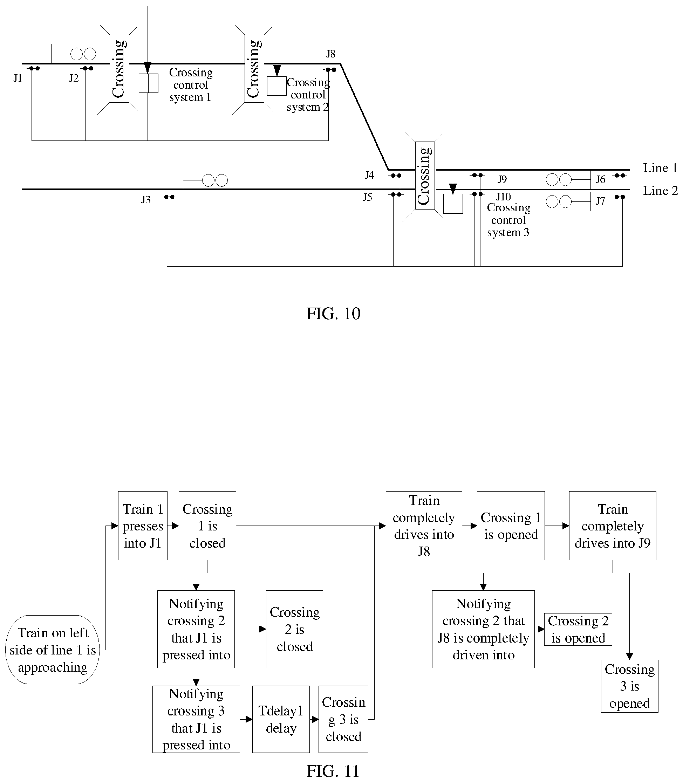

As shown in FIG. 10, for example, a rail area includes the crossing 1, crossing 2 and crossing 3, wherein the crossing 1 and the crossing 2 are generated when two roads cross with line 1; the crossing 1 is located on a left side of the line 1; the crossing 3 is located on a right side of the line 1 and line 2; and the crossing 3 is generated when a road crosses with the line 1 and the line 2; the crossing 1, crossing 2 and crossing 3 are respectively provided with the control system of the crossing 1, the control system of the crossing 2 and the control system of the crossing 3.

A plurality of train position detection points are provided on the line 1 and the line 2, the plurality of rain position detection points including J1, J2, J3, J4, J5, J6, J7, J8, J9 and J10, wherein J1 and J2 which are provided on a left side of the crossing 1; J8 is provided on a right side of the crossing 2; J3 and J5 are provided on the line 2 and located on a left side of the crossing 3; J4 is provided on the line 1 and between J8 and the crossing 3; and J6, J7, J9 and J10 are located on a right side of the crossing 3, where J6 and J9 are provided on the line 1, and J7 and J10 are provided on the line 2, and there is no position detection point which is provided between the crossing 1 and the crossing 2.

The train position detection points J1, J2 and J8 are managed by the crossing control system 1, while the train position detection points J3, J4, J5, J6, J7, J9 and J10 are managed by the crossing control system 3, and the crossing control system 2 uses the train position sharing information and controls no detection point.

As shown in FIG. 11, on the line 1, the crossing control systems 1, 2 and 3 constitute a set of area decentralized control groups; and on the line 2, the crossing control system 3 works independently. For the area decentralized control group of line 1, when a train enters from the left side, J1 is a detection point which the train of the line approaches, when the train presses into J1, the three crossings would be closed. Since there is a certain distance between crossing 3 and crossing 2, the closing delay time is set as Tdelay1. As the departure detection point of crossings 1 and 2, when the train enters J8 completely, crossings 1 and 2 would be automatically opened, and crossings 3 would remain being closed at this time; J9 is the departure detection point of crossing 3, and when the train enters J9 completely, crossing 3 is automatically opened.

When the train enters from the right side, J6 is a detection point which a train of the line approaches, when the train presses into J6, the 3 crossings would be closed. Since there is a certain distance among the crossing 1, crossing 2 and crossing 3, the closing delay time is set as Tdelay2. As the departure detection point of the crossings 3, when the train enters J4 completely, the crossings 3 would be automatically opened, and the crossing 1 and the crossing 2 remain being closed at this time; J2 is the departure detection point of the crossing 1 and crossing 2, and when the train enters J2 completely, the crossing 1 and crossing 2 are automatically opened, a control procedure thereof is the same as the control procedure when the train enters from the left side.

An application information transmission table of adjacent crossings is designed to match functional requirements of decentralized-crossing area control, as shown in Table 2:

**Table 2 Basic application information transmission table of adjacent crossings**

| Serial number | Content | Description |
|---|---|---|
| 1 | EC | Execution cycle |
| 2 | Axle counter point 1 | Information of axle counter point 1 |
| | | 0x55 indicates that no train presses into point |
| | | 0xaa indicates that a train presses into point |
| 3 | Axle counter point 2 | |
| 4 | ...... | |
| 5 | Axle counter point N | |
| 6 | Crossing state | Crossing state controlled by this device |
| | | 0x55 The crossing is well protected |
| | | 0xaa The crossing is not well protected |
| 7 | Crossing opening command | The device interfaces with the interlock and receives an interlocking remotely controlled command, which needs to be executed uniformly in an area in a decentralized manner; in the area, only one crossing safety control device is responsible for connecting to the interlocking system, and the other crossing safety control devices receive and execute this command. |
| | | 0x55 Opening crossing |
| | | 0x00 No command |
| 8 | Crossing closing command | The device interfaces with the interlock and receives an interlocking remotely controlled command, which needs to be executed uniformly in an area in a decentralized manner; in the area, only one crossing safety control device is responsible for connecting to the interlocking system, and the other crossing safety control devices receive and execute this command. |
| | | 0x55 Crossing closing command |
| | | 0x00 No command |
| 9 | Confirmation of train passing through | The device interfaces with the interlock and receives an interlocking remotely controlled command, which needs to be executed uniformly in an area in a decentralized manner; in the area, only one crossing safety control device is responsible for connecting to the interlocking system, and the other crossing safety control devices receive and execute this command. |
| | | 0x55 It has been manually confirmed that the train has left the crossing of the area (for an axle counter information error scenario) |
| | | 0x00 No command |

The rail area crossing control method comprises the following steps: setting the same operating cycle for the plurality of crossing control systems, and sharing, by the plurality of crossing control systems, information through a secure transmission network; and the shared information comprising an execution cycle (EC), information on a plurality of axle counter points, a crossing state, a crossing opening command, a crossing closing command, and a confirmation of train passage.

The EC is used for message delay processing. In the plurality of the crossing control systems, information receiving parties set local expected ECs; when the crossing control system receiving information receives a message from the other party, a message transmission delay △t is obtained according to the EC in the message and the local expected EC; and an actual delay time T=Tdelay-△t for closing the crossing is obtained according to preset delay time Tdelay for closing the crossing. An example of the delay processing is as follows:
Set Tdelay=25 (seconds).
The control system at crossing 1 sends a message to the control system at crossing 3. When the control system at crossing 1 sends a message, EC=1005 (seconds);
The message is delayed for 3 seconds due to a network transmission fault;
When the control system at crossing 3 receives the message (EC=1005) and the local expected EC=1008 (seconds), T= Tdelay-△t=25- (1008-1005) =22 (seconds);
The control system at crossing 3 closes crossing 2 after a 22-second delay.

The rail area crossing control method in the embodiment of the present invention constitutes the area decentralized control group through the secure transmission network within the area, so as to share information, save resources and realize safety control.

Notwithstanding the detailed description of the present invention with reference to the foregoing embodiments, it should be understood by a person skilled in the art that the technical solutions recorded in the foregoing embodiments may be modified or part of the technical features may be replaced with equivalent ones. Such modifications or replacements shall not make the essence of the corresponding technical solutions depart from the spirit and scope of the technical solutions of various embodiments of the present invention.

## Claims

1. A crossing safety control method, comprising the following steps:
outputting, by a crossing subsystem, a control command to an input-output subsystem according to obtained signal device state information and railway train running position information; and
controlling, by the input-output subsystem, a signal device according to the control command to automatically controls closing or opening of a crossing.

2. The crossing safety control method according to claim 1, wherein the signal device comprises a signal machine, a barrier machine and a sound device, and the signal machine comprises a blocking signal machine and a crossing signal machine.

3. The crossing safety control method according to claim 2, wherein controlling, by the input-output subsystem, the barrier machine according to the control command comprises the following steps:
if there is a railway train approaching the crossing, or no railway train approaching the crossing or a railway train has entered but has not yet left the crossing, the crossing subsystem sends a barrier lowering command to the input-output subsystem, and the input-output subsystem controls the barrier machine to drive a barrier to lower so as to close the crossing according to the barrier lowering command.

4. The crossing safety control method according to claim 3, wherein controlling, by the input-output subsystem, the barrier machine according to the control command further comprises the following steps:
if there is no railway train approaching the crossing, or a railway train has left the crossing, the crossing subsystem sends the barrier lowering command to the input-output subsystem according to a remotely controlled crossing closing command from an interlocking system; and the input-output subsystem controls the barrier machine to drive the barrier to lower so as to close the crossing according to the barrier lowering command.

5. The crossing safety control method according to claim 2, wherein controlling, by the input-output subsystem, the barrier machine according to the control command further comprises the following steps:
if there is no railway train approaching the crossing, or a railway train has left the crossing, and the crossing subsystem does neither receive a remotely controlled crossing closing command from an interlocking system nor receive a crossing closing command from a manual control panel, the crossing subsystem checks that the blocking signal machine restores a prohibiting signal through the input-output subsystem, and sends a barrier raising command to the input-output subsystem; and the input-output subsystem controls the barrier machine to drive the barrier to rise so as to open the crossing according to a barrier raising command.

6. The crossing safety control method according to claim 3, wherein the input-output subsystem controlling the barrier machine to drive a barrier to lower according to the barrier lowering command is specifically as follows:
the input-output subsystem closes a first level power supply switch, a second level power output loop switch and a third level power output loop switch in turn, and controls the barrier machine to drive the barrier to lower; the input-output subsystem obtains a position of the barrier in real time; if the barrier reaches a horizontal position or exceeds a predetermined time, the input-output subsystem disconnects the third level power output loop switch, the second level power output loop switch and the first level power supply switch in turn; and if the barrier does not reach the horizontal position or does not exceed the predetermined time, continuing with barrier switching, and the barrier machine continues to drive the barrier to lower.

7. The crossing safety control method according to claim 5, wherein the input-output subsystem controlling the barrier machine to drive the barrier to rise according to the barrier raising command is specifically as follows:
the input-output subsystem closes a first level power supply switch, a second level power output loop switch and a third level power output loop switch in turn, and controls the barrier machine to drive the barrier to rise; the input-output subsystem obtains a position of the barrier in real time; if the barrier reaches a vertical position or exceeds a predetermined time, the third level power output loop switch, the second level power output loop switch and the first level power supply switch are disconnected in turn; and if the barrier does not reach the vertical position or does not exceed the predetermined time, continuing with barrier switching, and the barrier machine continues to drive the barrier to rise.

8. The crossing safety control method according to claim 6 or 7, wherein the input-output subsystem obtaining a position of the barrier in real time is specifically as follows:
by checking a normally opened node state and a normally closed node state in the horizontal position of the barrier and a normally opened node state and a normally closed node state in the vertical position of the barrier, a position state of the barrier is determined;
the position state of the barrier is corrected by a switch position state of the input-output subsystem to determine a barrier valid position state; and the position of the barrier is determined according to the barrier valid position state.

9. The crossing safety control method according to claim 2, wherein the control method further comprises the following steps: a railway running permission is issued according to a state of the barrier machine, a state of the signal machine, and a monitoring state of an obstacle in a crossing area, which is specifically as follows:
whether there is a crossing that does not allow a railway train to pass through is judged according to the state of the barrier machine, the state of the signal machine, and the monitoring state of the obstacle in the crossing area; if the crossing exists, a railway running permission for prohibiting the railway train to pass through is generated, the blocking signal machine is controlled to display a prohibiting signal, a transponder is controlled to send a crossing unprotection message, and crossing unprotection information is output to a system such as the interlock; if the crossing does not exist, a railway running permission allowing the railway train to pass through is generated, the blocking signal machine is controlled to display a permission signal, the transponder is controlled to send a crossing protection message, and crossing protection information is output to a system such as the interlock.

10. The crossing safety control method according to any one of claims 1-7, and 9, wherein the control method further comprises the following steps: the input-output subsystem collects the signal device state information and sends the signal device state information to the crossing subsystem.

11. A crossing safety control system, comprising:
a crossing subsystem for outputting a control command to an input-output subsystem according to obtained signal device state information and railway train running position information; and
the input-output subsystem for controlling a signal device according to the control command so as to directly control the signal device at a crossing to automatically control closing or opening of the crossing.

12. The crossing safety control system according to claim 11, wherein the signal device comprises a signal machine, a barrier machine and a sound device, and the signal machine comprises a blocking signal machine and a crossing signal machine.

13. The crossing safety control system according to claim 12, wherein the crossing subsystem comprises a safety calculation host, the safety calculation host comprises I series and II series, and a main control unit of each series of the safety calculation host comprises a power module, a main control module and a communication expansion module; each series of the main control module is connected with an interlocking system, an axle counter, a barrier machine and the signal machine, each series of the main control module comprises a machine A, a machine B and a machine C; the machine A and the machine B are used for safety calculation, and results are valid when calculation results of the machine A and the machine B are consistent, otherwise the series turns into a safety state, the machine C is used for interface maintenance, and the machine C is also used for storing a maintenance log, and sending real-time maintenance information to an external maintenance interface.

14. A rail area crossing control group, the rail area comprising a plurality of adjacent crossings, wherein each crossing is provided with the crossing safety control system according to any one of claims 11-13, and the plurality of crossing safety control systems are connected to each other.

15. A rail area crossing control method, the rail area comprises a plurality of adjacent crossings, wherein the rail area crossing control method comprises the following steps:
providing the crossing control system according to any one of claims 11-13 at each crossing; and
sharing, by each crossing control system, train position detection information to coordinate the control of each crossing.

16. The rail area crossing control method according to claim 15, wherein the method further comprises the following steps:
setting the same operating cycle for the plurality of crossing control systems, and sharing, by the plurality of crossing control systems, information through a secure transmission network; the shared information comprising an execution cycle (EC), information on a plurality of axle counter points, a crossing state, a crossing opening command, a crossing closing command, and a confirmation of train passage; and
in the plurality of crossing control systems, setting local expected ECs at information receiving parties; when the crossing control system receiving information receives a message from the other party, obtaining a message transmission delay according to the EC in the message and the local expected EC; and obtaining an actual delay time for closing the crossing according to preset delay time for closing the crossing.
